# EUROPEAN PATENT APPLICATION

(11) **EP 3 597 599 A1**
(43) Date of publication of application: **22.01.2020**
(21) Application number: 18766846.2
(22) Date of filing: 01.03.2018
(51) Int. Cl.: C01F 7/00, C08K 3/26, C08K 9/04, C08L 75/04

(54) **HYDROTALCITE SUBSTANCE COMPOSITION, AND RESIN ADDITIVE CONTAINING SAID COMPOSITION**

(30) Priority: 17.03.2017 JP 2017052781
(71) Applicant: Sakai Chemical Industry Co., Ltd., Sakai, Osaka 590-8502 (JP)
(72) Inventor: TSUDA Koichi, Sakai-shi Osaka 590-0985 (JP)
(74) Representative: Plasseraud IP
(86) International application number: PCT/JP2018/007776
(87) International publication number: WO 2018/168496

(57) **Abstract**

Provided are a hydrotalcite substance composition having excellent dispersibility, and an additive using the hydrotalcite substance composition. The hydrotalcite substance composition of the present invention contains a hydrotalcite substance and a surface treatment agent containing an organic compound. The hydrotalcite substance is in a state in which at least part thereof is coated with the surface treatment agent. The amount of an extract to be extracted from the composition by hot toluene treatment is 1 wt% or less with respect to the composition, and the content of calcium in the extract is 500 ppm or less with respect to the weight of the composition.

## Description

### Technical Field

The present invention relates to a hydrotalcite substance composition and a resin additive containing the composition.

### Background Art

A hydrotalcite substance has an excellent anion exchange function, and hence is widely utilized as, for example, a catalyst, a pharmaceutical, and an additive for a resin (composition). For example, the hydrotalcite substance is used for polyurethane-based elastic fibers for the purpose of preventing deterioration due to chlorine (Patent Literature 1).

When the hydrotalcite substance is used as an additive for a resin composition, a problem with dispersibility may arise in that the hydrotalcite substance is aggregated or brought into a nonuniform dispersion state in the resin composition. The problem with dispersibility tends to be particularly remarkable in a polyurethane-based resin composition containing an amide-based solvent. In order to enhance the dispersibility of the hydrotalcite substance in the polyurethane-based resin composition, various dispersants have been proposed (for example, Patent Literatures 2 to 5). However, even when any such dispersant is used, its improving effect on the dispersibility varies for each production batch of the hydrotalcite substance. The variation may lead to reductions in quality and production stability of the resin composition, and hence it is desired that high dispersibility be exhibited more stably.

### Citation List

### Patent Literature

[PTL 1] JP 05-78569 A
[PTL 2] JP 2012-193259 A
[PTL 3] JP 2003-527476 A
[PTL 4] JP 2006-219768 A
[PTL 5] JP 2004-76207 A

### Summary of Invention

### Technical Problem

The present invention has been made in order to solve the above-mentioned problem, and a primary object of the present invention is to provide a hydrotalcite substance composition having excellent dispersibility in a resin composition, particularly a urethane-based resin composition containing an amide-based solvent.

### Solution to Problem

The inventor of the present invention has made investigations on means for enhancing the dispersibility of a hydrotalcite substance (in particular, dispersibility in a polyurethane-based resin composition). In the course of the investigations, the inventor has found that, in a hydrotalcite substance composition containing a surface treatment agent, calcium to be extracted therefrom with hot toluene affects its dispersibility.

According to one aspect of the present invention, there is provided a hydrotalcite substance composition, including: a hydrotalcite substance; and a surface treatment agent containing an organic compound. The hydrotalcite substance is in a state in which at least part thereof is coated with the surface treatment agent. In the hydrotalcite substance composition, an amount of an extract to be extracted by hot toluene treatment is 1 wt% or less with respect to the composition, and a content of calcium in the extract is 500 ppm or less with respect to a weight of the hydrotalcite substance composition.

In one embodiment, the content of calcium in the extract is 200 ppm or less with respect to the weight of the composition.

In one embodiment, the hydrotalcite substance includes a hydrotalcite substance subjected to crystallization water removal treatment.

In one embodiment, the surface treatment agent includes at least one kind selected from a higher fatty acid, a metal salt of a higher fatty acid and a metal other than calcium, an anionic surfactant, a phosphoric acid ester, and a coupling agent.

According to another aspect of the present invention, there is provided an additive. The additive of the present invention includes the above-mentioned hydrotalcite substance composition.

According to yet another aspect of the present invention, there is provideda resin composition. The resin composition of the present invention includes a urethane-based resin, an amide-based solvent, and the above-mentioned additive.

### Advantageous Effects of Invention

According to the present invention, the hydrotalcite substance composition having excellent dispersibility can be provided. As described above, in the hydrotalcite substance composition, calcium to be extracted therefrom with hot toluene may affect its dispersibility in a resin composition. According to the present invention, even when the hydrotalcite substance contains calcium, the dispersibility of the hydrotalcite substance in a resin composition can be stably enhanced. Calcium contained in the hydrotalcite substance is derived from an industrial metal compound serving as a general raw material (e.g., light burned magnesium serving as a starting material for a magnesium compound, or magnesium hydroxide obtained by adding slaked lime, quicklime, or the like to seawater or ionic bittern). Accordingly, the production of a hydrotalcite substance substantially free of calcium may lead to an increase in production cost. However, according to the present invention, the increase in cost of the production of the hydrotalcite substance composition can also be suppressed. Accordingly, the hydrotalcite substance composition of the present invention can enhance quality and productivity in the production of a resin composition and a product using the resin composition (e.g., fibers).

### Description of Embodiments

Embodiments of the present invention are described below. However, the present invention is not limited to these embodiments.

### A. Hydrotalcite Substance Composition

A hydrotalcite substance composition of the present invention contains a hydrotalcite substance and a surface treatment agent containing an organic compound. The hydrotalcite substance is in a state in which at least part of its surface is coated with the surface treatment agent. The amount of an extract to be extracted from the hydrotalcite substance composition by hot toluene treatment (hereinafter referred to as hot toluene extract) is 1 wt% or less with respect to the composition, and the content of calcium in the hot toluene extract is 500 ppm or less with respect to the weight of the composition. When the amount of the hot toluene extract is 1 wt% or less with respect to the composition and the content of calcium in the hot toluene extract is 500 ppm or less with respect to the weight of the composition, high dispersibility can be exhibited. Further, the high dispersibility is obtained even when a surface treatment agent that has heretofore been considered to have room for improvement in dispersibility is used, and hence various choices of surface treatment agents are available. Further, the dispersibility can be enhanced without the use of an expensive surface treatment agent. In addition, a variation in dispersibility for each production batch of the hydrotalcite substance, which has been perceived as a problem heretofore, can also be prevented. Herein, the extract to be extracted by hot toluene treatment refers to an extract extracted by a hot toluene extraction method described in Examples herein.

In the hydrotalcite substance composition, the hydrotalcite substance is in a state in which at least part thereof is coated with the surface treatment agent. By virtue of being in a state of being coated with the surface treatment agent, the hydrotalcite substance can exhibit higher dispersibility in a resin composition.

The amount of the hot toluene extract of the hydrotalcite substance composition is 1 wt% or less, preferably 0.8 wt% or less, more preferably 0.5 wt% or less with respect to the hydrotalcite substance composition. When the amount of the hot toluene extract is 1 wt% or less, stable dispersibility in a resin composition is obtained. The ratio of the hot toluene extract is preferably as small as possible. From the viewpoint of achieving compatibility between cost and quality, the amount of the hot toluene extract may be, for example, 0.1 wt% or more with respect to the hydrotalcite substance composition.

The content of calcium in the hot toluene extract is 500 ppm or less, preferably 400 ppm or less, particularly preferably 200 ppm or less with respect to the weight of the composition. When the content of calcium falls within the above-mentioned range, the hydrotalcite substance composition can be prevented from being swollen (gelled) in a resin composition, and hence can maintain a stable dispersion state over time. The content of calcium is preferably below a detection limit.

Calcium contained in the hydrotalcite substance composition is not particularly limited, and it is only required that the amount of the hot toluene extract and the content of calcium in the hot toluene extract fall within the above-mentioned ranges. The content of calcium in the hydrotalcite substance composition is, for example, 1,000 ppm or less, preferably 750 ppm or less. The content of calcium in the hydrotalcite substance composition may be, for example, 100 ppm or more from the viewpoint of achieving compatibility between cost and quality. Calcium is a divalent metal ion, and hence may be contained as a divalent metal ion in the hydrotalcite substance. However, calcium that is not extracted by the hot toluene extraction is present in a stable state in the hydrotalcite substance, and hence is considered not to cause the above-mentioned swelling or the like.

### A-1. Hydrotalcite Substance

Any appropriate hydrotalcite substance may be used as the hydrotalcite substance. The hydrotalcite substance is represented by the general formula M²⁺₁₋ₓM³⁺ₓ(OH)₂Aⁿ⁻x/n·mH₂O. In the general formula, M²⁺ represents at least one kind of divalent metal ion selected from the group consisting of Mg²⁺, Zn²⁺, Fe²⁺, Mn²⁺, Co²⁺, Ni²⁺, and Cu²⁺. M³⁺ represents at least one kind of trivalent metal ion selected from the group consisting of Al³⁺, Fe³⁺, Cr³⁺, and Co³⁺. Aⁿ⁻ represents at least one kind of anion selected from the group consisting of OH⁻, CO₃²⁻, SO₄²⁻, NO³⁻, and Cl⁻. x represents a number of 0<x≤0.5, m represents a number of 0≤m≤1, and n satisfies 1≤n≤3. The hydrotalcite substance may be a natural product, or may be a synthetic product. A synthetic product is preferred because the content of calcium can be adjusted to a desired amount.

Specific examples of the hydrotalcite substance include Mg₆Al₂(OH)₁₆CO_{3·}4H₂O, Mg_{4.5}Al₂(OH)₁₃CO₃·3.5H₂O, Mg₄Al₂(OH)₁₂CO₃·3H₂O, and Mg_{4.5}Al₂(OH)₁₃CO₃Mg_{3.5}ZnAl₂(OH)₁₃CO₃·3.5H₂O. The hydrotalcite substances may be used alone or in combination thereof.

When the hydrotalcite substance is synthesized, the synthesis may be performed by any appropriate method. For example, the synthesis may be performed by: preparing a slurry containing hydroxides, oxides, carbonates, or the like of the constituent metals of the hydrotalcite substance, such as magnesium and aluminum; then subjecting the slurry to wet pulverization treatment as required; and subsequently adding a carbon dioxide gas, or salts, such as a bicarbonate and a carbonate, followed by heating and mixing. In addition, as another method, there is given a method involving subjecting a magnesium compound and an aluminum compound to hydrothermal treatment in an aqueous solution containing a carbonate ion in the presence of an alkali. When the hydrothermal treatment is performed, it is preferred to use, as a magnesium source, a water-soluble salt, such as magnesium sulfate, magnesium chloride, or magnesium nitrate, and/or a water-insoluble magnesium compound, such as magnesium oxide, magnesium hydroxide, magnesium carbonate, or basic magnesium carbonate, having an average particle diameter of 10 µm or less. In addition, it is preferred to use, as an aluminum source, a water-soluble salt, such as aluminum sulfate or aluminum chloride, and/or aluminum hydroxide having an average particle diameter of 10 µm or less. Ion-exchanged water or distilled water is preferably used as water to be used for the preparation of each of the slurry and the aqueous solution. The use of ion-exchanged water or distilled water can reduce the amount of calcium to be contained in the hydrotalcite substance. In addition, when a water-insoluble compound is used, the water-insoluble compound may be pulverized so as to have the above-mentioned particle diameter in advance using a wet pulverizer, such as a bead mill, or a dry pulverizer, such as a hammer mill or a jet mill. When the pulverization is performed, one kind of compound may be subjected to the pulverization step alone, or two or more kinds of compounds may be simultaneously subjected to the pulverization step.

A compound having a low calcium content is preferably used as each of the hydroxides, oxides, carbonates, or the like of the constituent metals of the hydrotalcite substance, and the magnesium compound and the aluminum compound. Specifically, a compound having a calcium content of less than 100 ppm is preferably used. In addition, the bicarbonate and/or the carbonate to be used for introducing a carbonate ion into the hydrotalcite substance also preferably has a low calcium content. Therefore, a bicarbonate and/or a carbonate prepared using a carbon dioxide gas may be preferably used. When the synthesis is performed using such materials, the amount of calcium that may be contained in the hydrotalcite substance can be reduced. In addition, the use of a carbon dioxide gas in combination with the use of the bicarbonate and/or the carbonate is also useful in reducing the amount of calcium to be contained in the hydrotalcite substance.

In the case of using the hydroxides, oxides, carbonates, or the like of the metals, the median diameter (d50) of each of the hydroxides, oxides, carbonates, or the like is preferably from 0.1 µmto 10 µm, more preferably from 0.1 µm to 3 µm. When the median diameter falls within the above-mentioned range, the amount of calcium to be contained in the hydrotalcite substance can be reduced. Herein, the median diameter refers to a value measured using a laser diffraction particle size distribution analyzer.

The hydrothermal treatment may be performed by any appropriate method, and is generally performed in a pressure-resistant vessel, such as an autoclave. A treatment temperature (slurry temperature) is generally from 120°C to 250°C, preferably from 130°C to 230°C, more preferably from 140°C to 230°C. Depending on an apparatus to be used for the treatment, it may be impossible to measure the temperature. In that case, the reaction of the treatment may be adjusted on the basis of the pressure in the vessel. In that case, the pressure is, for example, from 0.1 MPa to 10 MPa, preferably from 0.2 MPa to 4 MPa. A treatment time is, for example, from 1 hour to 10 hours, preferably from 1 hour to 4 hours.

It is preferred that a slurry after the hydrothermal treatment be separated by filtration, and then a solid (wet cake) containing the hydrotalcite substance and the filtrate be separated from each other, and the collected solid be subjected to water washing. The water washing may be performed only once, or may be performed a plurality of times. Water to be used for the water washing is preferably ion-exchanged water or distilled water. The use of ion-exchanged water or distilled water can reduce the amount of calcium to be contained in the hydrotalcite substance to be obtained. The cake after the water washing may be used in surface treatment to be described later.

Then, the solid separated by filtration is collected and dried by heating with an oven or the like, and as required, the solid after the drying is subjected to dry pulverization. Thus, the hydrotalcite substance may be obtained.

In one embodiment, the hydrotalcite substance includes a hydrotalcite substance subjected to crystallization water removal treatment. When the crystallization water removal treatment is performed, the enhancing effect on the dispersibility can be exhibited more significantly. The crystallization water removal treatment may be performed by any appropriate method. The crystallization water removal treatment may be performed by, for example, firing the hydrotalcite substance at from 200°C to 350°C for 0.5 hour to 24 hours. The crystallization water removal treatment may be performed for the hydrotalcite substance alone, or may be performed after the preparation of the composition.

### A-2. Surface Treatment Agent

Any appropriate surface treatment agent may be used as the surface treatment agent. Examples thereof include a higher fatty acid, a metal salt of a higher fatty acid and a metal other than calcium, an anionic surfactant, a phosphoric acid ester, and coupling agents, such as a silane coupling agent, a titanium coupling agent, and an aluminum coupling agent. Specific examples thereof include: higher fatty acids, such as stearic acid, oleic acid, erucic acid, palmitic acid, and lauric acid; metal salts, such as a lithium salt, a sodium salt, and a potassium salt, of those higher fatty acids; anionic surfactants, including sulfuric acid ester salts of higher alcohols, such as stearyl alcohol and oleyl alcohol, a sulfuric acid ester salt of polyethylene glycol ether, an amide-bonded sulfuric acid ester salt, an ether-bonded sulfonic acid salt, an ester-bonded sulfonate, an amide-bonded alkyl aryl sulfonic acid salt, and an ether-bonded alkyl aryl sulfonic acid salt; phosphoric acid esters, such as an acid type or alkali metal salt or amine salt of a mono- or diester of orthophosphoric acid and oleyl alcohol or stearyl alcohol, or a mixture thereof; silane coupling agents, such as vinylethoxysilane, γ-methacryloxypropyltrimethoxysilane, vinyltris(2-methoxyethoxy)silane, and γ-aminopropyltrimethoxysilane; titanium coupling agents, such as isopropyl triisostearoyl titanate, isopropyl tris(dioctylpyrophosphate) titanate, and isopropyltridecylbenzenesulfonyl titanate; and alkali coupling agents, such as acetoalkoxy aluminum diisopropylate. As the surface treatment agent, a higher fatty acid or a metal salt of a higher fatty acid and a metal other than calcium is preferred, and stearic acid or a metal salt of stearic acid and a metal other than calcium, such as sodium stearate or magnesium stearate, is more preferred from the viewpoints of dispersibility into a resin, handleability, and cost.

As described above, the amount of the hot toluene extract of the hydrotalcite substance composition of the present invention is 1 wt% or less with respect to the hydrotalcite substance composition . The hot toluene extract is typically a metal salt of the organic compound contained in the surface treatment agent and calcium. Specifically, when stearic acid is used as the surface treatment agent, calcium stearate may be extracted as at least part of the hot toluene extract. The calcium salt may serve as a factor in lowering the dispersibility of the hydrotalcite substance. There is a disclosure that a metal soap, such as calcium stearate, is used as an additive for improving spinnability in the production of polyurethane-based elastic fibers (for example, JP 2007-100248 A). However, in Examples of this technical document, only magnesium stearate is used. An investigation made by the inventor of the subject application has found that calcium stearate does not provide the result that the spinnability is practically improved. In the present invention, such calcium salt is not added to the hydrotalcite substance composition and a resin composition containing the hydrotalcite substance composition, and moreover, the formation of the calcium salt during the production process of those compositions is also suppressed. As a result, the dispersibility of the hydrotalcite substance composition can be enhanced. This is also a feature of the present invention.

The surface treatment agent may be used in any appropriate amount depending on purposes. The amount is, for example, preferably from 0.1 part by weight to 10 parts by weight, more preferably from 0.5 part by weight to 3.5 parts by weight with respect to 100 parts by weight of the hydrotalcite substance. When the amount falls within the above-mentioned range, the improving effect on the dispersibility obtained by using the surface treatment agent can be sufficiently obtained. In addition, the occurrence of problems due to the surface treatment agent (e.g., blooming and stickiness of a resin molded body containing the hydrotalcite substance composition) can be prevented.

### B. Production Method for Hydrotalcite Substance Composition

The hydrotalcite substance composition of the present invention may be produced by any appropriate method. For example, the hydrotalcite substance composition may be produced by mixing any appropriate hydrotalcite substance and any appropriate surface treatment agent.

As described above, at least part of the hydrotalcite substance is coated with the surface treatment agent. Any appropriate method may be used as a method of coating the hydrotalcite substance with the surface treatment agent (surface treatment method), and examples thereof include a wet method and a dry method. A surface treatment method based on the wet method may be performed by, for example, adding the surface treatment agent as a solution or an emulsion to a slurry containing the hydrotalcite substance, stirring the whole, then sufficiently mixing the components while heating the whole to a temperature of up to 100°C as required, and then subjecting the hydrotalcite substance to filtration, water washing, and drying. When the surface treatment agent is used as a solution or an emulsion, ion-exchanged water or distilled water is preferably used as a dispersion medium.

A heating and mixing time after the addition of the surface treatment agent (also referred to as surface treatment time or aging time) may be set to any appropriate time, and is preferably 24 hours or more. As the heating and mixing time becomes longer, the amount of the hot toluene extract from the hydrotalcite substance composition tends to be reduced. In addition, the heating and mixing time is, for example, 100 hours or less. This is because the effect of reducing the amount of the hot toluene extract becomes small, and hence there is little advantage to performing the heating and mixing in excess of 100 hours.

The surface treatment is performed preferably in the presence of a sodium compound, more preferably in the presence of a water-soluble sodium compound. When the surface treatment is performed in the presence of a sodium compound, the amount of the hot toluene extract from the hydrotalcite substance composition tends to be reduced. Any appropriate sodium compound may be used as the sodium compound. Examples thereof include sodium carbonate, sodium bicarbonate, sodium chloride, sodium hydroxide, sodium phosphate, and fatty acid sodium such as sodium stearate.

When the surface treatment is performed by the wet method, the surface treatment is performed, for example, after the pH of the solution or emulsion containing the surface treatment agent has been adjusted to a pH of from 7 to 14. When the surface treatment is performed under such condition, the amount of the hot toluene extract from the hydrotalcite substance composition tends to be reduced.

The slurry containing the hydrotalcite substance to be used for the surface treatment may be prepared for the surface treatment step. That is, the surface treatment may be performed by adding the surface treatment agent to a slurry obtained by dispersing a wet cake obtained in the course of synthesis of the hydrotalcite substance in water. The surface treatment may be performed by directly adding the surface treatment agent to a slurry obtained by the heating and mixing treatment or the hydrothermal treatment.

### C. Additive

The additive of the present invention includes the above-mentioned hydrotalcite substance composition. The hydrotalcite substance of the present invention is excellent in dispersibility in a resin composition, and hence has excellent characteristics as an additive for a resin composition. The additive of the present invention may contain any appropriate other component, such as an antioxidant, depending on applications and the like.

The additive of the present invention may be used in a solid state, or may be used in a state of being dispersed in any appropriate solvent.

### D. Resin Composition

The resin composition of the present invention includes a urethane-based resin, an amide-based solvent, and the above-mentioned additive. A related-art hydrotalcite substance has a problem of being difficult to uniformly disperse in an amide-based solvent to be used for the production of polyurethane-based fibers. The hydrotalcite substance composition of the present invention can be satisfactorily dispersed even in the amide-based solvent, and hence the hydrotalcite substance is satisfactorily dispersed and hardly causes a temporal change, such as solid-liquid separation, in the solvent. Accordingly, a resin composition showing little deterioration over time can be provided.

The content of the additive in the resin composition of the present invention may be set to any appropriate range. The content of the additive in the resin composition is preferably from 0.1 part by weight to 10 parts by weight with respect to 100 parts by weight of the urethane-based resin. When such content is adopted, the effect of the addition of the hydrotalcite substance can be sufficiently obtained.

The urethane-based resin is obtained by, for example, allowing an active hydrogen-containing compound to react with a prepolymer obtained by allowing a high-molecular-weight diol and a diisocyanate to react with each other.

Any appropriate diol may be used as the high-molecular-weight diol. Examples thereof include polyester diol, polycarbonate diol, and polyether diol. Of those, polyether diol ispreferred. The high-molecular-weight diols may be used alone or in combination thereof.

Any appropriate diisocyanate may be used as the diisocyanate. Examples thereof include aliphatic, alicyclic, or aromatic organic diisocyanates each having two isocyanate groups in the molecule. Specific examples thereof include organic diisocyanates, such as 4,4'-diphenylmethane diisocyanate, 2,4- or 2,6-tolylene diisocyanate, p-phenylene diisocyanate, 1,5-naphthalene diisocyanate, xylylene diisocyanate, hexamethylene diisocyanate, isophorone diisocyanate, and 4,4'-dicyclohexylmethane diisocyanate. Of those, 4,4'-diphenylmethane diisocyanate is preferred. The diisocyanates may be used alone or in combination thereof.

Any appropriate compound may be used as the active hydrogen-containing compound. For example, alow-molecular-weight compound with a molecular weight of 500 or less containing at least two hydrogen atoms each capable of reacting with an isocyanate may be used. Specific examples thereof include: diamines, such as ethylenediamine, propylenediamine, tolylenediamine, m-xylylenediamine, 1,3-diaminocyclohexane, isophoronediamine, hydrazine, 4,4'-diaminodiphenylmethane, dihydrazide, and piperazine; and diols, such as ethylene glycol, propylene glycol, and 1,4-butanediol. Of those, ethylenediamine and 1,2-propylenediamine are preferred. Those compounds may be used alone or in combination thereof.

Any appropriate solvent may be used as the amide-based solvent. Examples of the amide-based solvent include dimethylacetamide and dimethylformamide. Of those, dimethylacetamide is preferred.

The resin composition of the present invention may contain, in addition to the additive containing the hydrotalcite substance composition, any appropriate other additive depending on applications in which the resin composition is to be used. Examples of the other additive include a UV inhibitor, an antioxidant, a pigment, a filler, an antistatic agent, a microbicide, a deodorant, and a lubricant. The usage amount of any such other additive may be set to any appropriate value depending on purposes.

The resin composition of the present invention may be prepared by any appropriate method. An example thereof is a method involving adding and mixing the additive into a solution containing the urethane-based resin and any appropriate solvent. The mixing may be performed using any appropriate means, and for example, the mixing is performed using a homomixer.

An example of the applications of the resin composition of the present invention is the production of polyurethane-based fibers. As a method for spinning using the resin composition, a wet spinning method may be used, or a dry spinning method may be used. As described above, the hydrotalcite substance of the present invention can be satisfactorily dispersed even when an amide-based solvent is used as its solvent. Accordingly, the resin composition of the present invention can prevent the occurrence of a problem of a reduction in productivity even when used in the dry spinning method.

### Examples

Now, the present invention is specifically described by way of Examples. However, the present invention is by no means limited to these Examples.

### [Example 1]

111.8 g of magnesium hydroxide (product name: 200-06H, manufactured by Kyowa Chemical Industry Co., Ltd., calcium content: 30 ppm) and 74.8 g of aluminum hydroxide (product name: HIGHLITE H-32, manufactured by Showa Denko K.K., median diameter (d50)=8.0 µm, calcium content: 20 ppm) were placed in a 5 L reaction vessel, and ion-exchanged water was added to a total volume of 3 L, followed by stirring for 5 minutes to prepare a slurry. The slurry was subjected to wet pulverization treatment with a wet pulverization apparatus (product name: DYNO-MILL MULTILAB) for 12 minutes (residence time). After that, to the slurry subjected to the pulverization treatment, sodium bicarbonate (obtained by passing a carbon dioxide gas (manufactured by Iwatani Corporation) through caustic soda (sodium hydroxide, manufactured by AGC Inc., calcium content: 20 ppm) so as to have a pH of 8, 60 wt% in terms of sodium bicarbonate) was added at 1/2 mol with respect to 1 mol of magnesium hydroxide, followed by stirring for 10 minutes. Then, the slurry was transferred to an autoclave, and subjected to hydrothermal treatment at 190°C for 4 hours (pressure: 1.3 MPa). The resultant slurry was filtered, and subjected to water washing with 15 L of ion-exchanged water. After that, a wet cake was isolated, and the wet cake was added to 3 L of ion-exchanged water, followed by mixing until a slurry was obtained. Separately, 7 g of a surface treatment agent (manufactured by Kao Corporation, product name: LUNAC S70, industrial stearic acid (calcium content: below a measurement lower limit)) was added to 1 L of ion-exchanged water, and the pH of the mixture was adjusted to 10 with a 48% aqueous solution of sodium hydroxide to prepare a surface treatment agent solution. While the resultant slurry was kept at 95°C, the prepared surface treatment agent solution was added, and surface treatment was performed for 48 hours. Then, a solid was separated by filtration from the slurry, and then the filter cake was subjected to water washing with 15 L of ion-exchanged water of 35°C. The resultant water-washed cake was dried at 100°C for 24 hours, and pulverized to provide a hydrotalcite substance composition (sample A) as a solid product.

### [Example 2]

400 ml of ion-exchanged water was placed in a 3 L reaction vessel, and 800 ml of a mixed aqueous solution (Mg content: 33.0 g/L, Al content: 17.0 g/L) of magnesium chloride hexahydrate (manufactured by Tomita Pharmaceutical Co., Ltd., calcium content: 30 ppm) and aluminum sulfate (manufactured by Junsei Chemical Co., Ltd., calcium content: 20 ppm) and 800 ml of a mixed aqueous solution (NaOH content: 166.2 g/L, Na₂CO₃ content: 170 g/L) of caustic soda (sodium hydroxide) (manufactured by AGC Inc., calcium content: 20 ppm) and an aqueous solution of sodium carbonate (obtained by adding a carbon dioxide gas (manufactured by Iwatani Corporation) to sodium hydroxide to a pH of 11) were simultaneously added to the stirred ion-exchanged water. The mixture was stirred for 10 minutes, and the resultant was subjected to hydrothermal synthesis in an autoclave at 180°C for 4 hours (pressure: 1.0 MPa). The resultant slurry was filtered, and subjected to water washing with 15 L of ion-exchanged water (calcium content: 5 ppm). After that, a wet cake was isolated, 3 L of ion-exchanged water was added to the wet cake, and the mixture was stirred until a slurry was obtained. While the resultant slurry was kept at 95°C, 5 g of a surface treatment agent (manufactured by Kao Corporation, product name: LUNAC S70, industrial stearic acid (calcium content: below a measurement lower limit)) was added. After that, a 48% aqueous solution of sodium hydroxide was added so as to achieve a pH of 10. The prepared surface treatment agent solution was added, and surface treatment was performed for 48 hours . Then, a solid was separated by filtration from the slurry, and then the filter cake was subjected to water washing with 10 L of ion-exchanged water of 35°C. The resultant water-washed cake was dried at 100°C for 24 hours, and pulverized to provide a hydrotalcite substance composition (sample B) as a solid product.

### [Example 3]

The hydrotalcite substance composition obtained in Example 2 was subjected to heating treatment using an oven at 250°C for 3 hours to provide a hydrotalcite substance composition (sample B-1).

### [Example 4]

A hydrotalcite substance composition (sample C) was obtained as a solid product in the same manner as in Example 1 except that aluminum hydroxide having a median diameter (d50) of 7.0 µm was used.

### (Comparative Example 1)

A hydrotalcite substance composition (sample D) was obtained as a solid product in the same manner as in Example 3 except that: magnesium hydroxide having a calcium content of 1,500 ppm (product name: MAGSTAR#4, manufactured by Tateho Chemical Industries Co., Ltd.) was used; industrial water was used in place of the ion-exchanged water; and industrial sodium carbonate (manufactured by Central Glass Co., Ltd., product name: Soda Ash (Bicarbonate)) was used as the sodium carbonate.

### (Comparative Example 2)

A hydrotalcite substance composition (sample E) was obtained as a solid product in the same manner as in Comparative Example 1 except that magnesium hydroxide having a calcium content of 2,000 ppm (product name: MAGSTAR#20, manufactured by Tateho Chemical Industries Co., Ltd.) was used.

### (Comparative Example 3)

The hydrotalcite substance composition obtained in Comparative Example 2 was subjected to heating treatment using an oven at 250°C for 3 hours to provide a hydrotalcite substance composition (sample E-1).

### (Comparative Example 4)

A hydrotalcite substance composition (sample F) was obtained as a solid product in the same manner as in Example 2 except that: magnesium sulfate heptahydrate (calcium content: 2, 000ppm, obtained by adjusting industrial light burned magnesium (manufactured by Tateho Chemical Industries Co., Ltd.) with sulfuric acid to a pH of 6) was used in place of the magnesium chloride hexahydrate (calcium content: 30 ppm); a mixed aqueous solution of sodium hydroxide and industrial sodium carbonate was used; and industrial water was used in place of the ion-exchanged water.

The following evaluations were performed using each of the hydrotalcite substance compositions obtained in Examples 1 to 4 and Comparative Examples 1 to 4. The characteristics and evaluation results of each hydrotalcite substance composition are shown in Table 1.

### 1. Extraction with Hot Toluene

5 g of the obtained hydrotalcite substance composition and 100 ml of toluene (Wako special grade reagent) were placed in a Soxhlet extractor, and heated for 10 hours to perform an extraction operation. The resultant extraction liquid was kept at 100°C for 2 hours to have a constant weight, placed in a 100 ml beaker whose weight had been measured, and evaporated to dryness using a hot plate having its plate surface set to 120°C to provide a dry solid (hot toluene extract) . Then, the weight of the whole was measured, and the weight of the beaker measured in advance was subtracted therefrom to calculate the weight of the dry solid. The ratio of the weight of the hydrotalcite initially loaded into the Soxhlet extractor to the obtained weight of the dry solid was calculated, and defined as a hot toluene extraction amount.

### 2. Measurement of Calcium Content in Hot Toluene Extract

The hot toluene extract, 2 ml of 60% nitric acid, 10 ml of ether, and 30 ml of ion-exchanged water were placed in a container, and were heated using a hot plate having its plate surface set to 120 °C to remove the ether. Then, with the use of the resultant liquid, a calcium content in the hot toluene extract was measured by ICP-MS (manufactured by Seiko Instruments Inc., product name: ICP1700HVR) . The ratio thereof to the initially loaded hydrotalcite substance composition was measured, and defined as a calcium amount to be extracted with hot toluene.

### 3. Measurement of Calcium Content in Hydrotalcite Substance Composition

0.2 g of the obtained hydrotalcite substance composition, 2 ml of 60% nitric acid, and 2 ml of 90% sulfuric acid were placed in a container, and heated on a hot plate having its plate surface set to 120°C to evaporate moisture. After that, the resultant was cooled to room temperature, 2 ml of 60% nitric acid was added, and then the mixture was heated on a hot plate having its plate surface set to 120°C to evaporate moisture. The operations of nitric acid addition and heating were repeated 5 times. Then, ion-exchanged water was added to the sample from which moisture had been evaporated to prepare 100 ml of an aqueous solution using a volumetric flask. Then, with the use of the resultant liquid, a calcium content in the hydrotalcite substance composition was measured by ICP-MS (manufactured by Seiko Instruments Inc., product name: ICP1700HVR) .

### 4. Evaluation of Viscosity and Dispersibility (100-mesh Metal Screen Residue)

300 g of dimethylacetamide (DMAC) was placed in a 500 ml glass beaker, and then 50 g of the obtained hydrotalcite substance composition was added, and the contents were mixed by stirring with a high-speed stirring disper at 3,000 rpm for 3 minutes to provide a slurry. The viscosity of the slurry immediately after the completion of the stirring was measured with a B-type viscometer (manufactured by Toki Sangyo Co. , Ltd. , product name : TVB-10) . After that, the slurry was left to stand for 2 hours, its viscosity was measured again, and the state of the slurry was visually observed. A case in which the slurry was uniform and smooth was evaluated as "satisfactory", and a case in which a visually recognizable aggregate was present and partial separation occurred was evaluated as "unsatisfactory".

Then, the slurry after standing for 2 hours was passed through a 100-mesh metal screen. A residue remaining on the screen was washed with 200 ml of ethanol, then dried with an oven at 100°C for 12 hours, and measured for its weight. An amount (residue amount) that did not pass through the screen out of 50 g of the added hydrotalcite substance composition was determined.

**Table 1**

| | Hydrotalcite | | | | State immediately after stirring | State 2 hours after stirring | | | |
|---|---|---|---|---|---|---|---|---|---|
| | Sample | Ca content (ppm) | Hot toluene extract (%) | Ca in hot toluene extract (ppm) * | Viscosity (CP) | Viscosity (CP) | State of slurry | Presence or absence of layer separation | Residue amount (%) |
| Example 1 | A | 500 | 0.5 | 300 | 50 | 100 | Satisfactory | Absent | 10 |
| Example 2 | B | 300 | 0.4 | 100 | 30 | 60 | Satisfactory | Absent | 5 |
| Example 3 | B1 | 330 | 0.4 | 120 | 20 | 50 | Satisfactory | Absent | 4 |
| Example 4 | C | 100 | 0.2 | 20 | 20 | 20 | Satisfactory | Absent | 0 |
| Comparative Example 1 | D | 1,100 | 1.1 | 600 | 300 | 650 | Unsatisfactory | Two-layer separation | 80 |
| Comparative Example 2 | E | 1,300 | 1.5 | 800 | 450 | 900 | Unsatisfactory | Two-layer separation | 90 |
| Comparative Example 3 | E1 | 1,400 | 1.6 | 900 | 420 | 850 | Unsatisfactory | Two-layer separation | 92 |
| Comparative Example 4 | F | 1,800 | 1.6 | 950 | 500 | 1,000 | Unsatisfactory | Two-layer separation | 98 |

| | | | | | | | | | |
|---|---|---|---|---|---|---|---|---|---|
| *: Ratio to hydrotalcite substance composition | | | | | | | | | |

Each of the slurries using the hydrotalcite substance compositions of Examples 1 to 4 had a low viscosity and maintained a stable dispersion state even after standing for 2 hours. Meanwhile, each of the slurries using the hydrotalcite substance compositions of Comparative Examples 1 to 4 had a high viscosity even immediately after the stirring, and was mostly turned to a residue after standing for 2 hours.

### Industrial Applicability

The hydrotalcite substance composition of the present invention can be suitably used as, for example, an additive for a resin.

## Claims

1. A hydrotalcite substance composition, comprising:
a hydrotalcite substance; and
a surface treatment agent containing an organic compound,
wherein the hydrotalcite substance is in a state in which at least part thereof is coated with the surface treatment agent, and
wherein an amount of an extract to be extracted from the composition by hot toluene treatment is 1 wt% or less with respect to the composition, and a content of calcium in the extract is 500 ppm or less with respect to a weight of the composition.

2. The hydrotalcite substance composition according to claim 1, wherein the content of calcium in the extract is 200 ppm or less with respect to the weight of the composition.

3. The hydrotalcite substance composition according to claim 1 or 2, wherein the hydrotalcite substance comprises a hydrotalcite substance subjected to crystallization water removal treatment.

4. The hydrotalcite substance composition according to any one of claims 1 to 3, wherein the surface treatment agent comprises at least one kind selected from a higher fatty acid, a metal salt of a higher fatty acid and a metal other than calcium, an anionic surfactant, a phosphoric acid ester, and a coupling agent.

5. An additive, comprising the hydrotalcite substance composition of any one of claims 1 to 4.

6. A resin composition, comprising:
a urethane-based resin;
an amide-based solvent; and
the additive of claim 5.
